# DEMANDE DE BREVET EUROPEEN

(11) **EP 4 841 559 A1**
(43) Date de publication de la demande: **18.11.2026**
(21) Numéro de dépôt: 26176198.5
(22) Date de dépôt: 04.05.2026
(51) Int. Cl.: G06T 7/00, G06T 7/20

(54) **PROCÉDÉ ET SYSTÈME POUR DÉTERMINER LA DÉFORMATION D'UNE STRUCTURE À COUCHES MULTIPLES**

(30) Priorité: 16.05.2025 FR 2505240
(71) Demandeur: Airbus SAS, 31700 Blagnac (FR)
(72) Inventeur: PETIOT, Caroline, 31700 BLAGNAC CEDEX (FR); CHELAGHMA, Saber, 31700 BLAGNAC CEDEX (FR); TEZEGHDANTI, Walid, 31700 BLAGNAC (FR)
(74) Mandataire: Gevers & Orès

(57) **Abrégé**

- Le procédé (P) comprend une suite (S1) d'étapes au cours de laquelle un chargement mécanique croissant est appliqué sur un échantillon de la structure à couches multiples et des images 3D successives de l'échantillon soumis au chargement mécanique croissant sont générées, et une suite (S2) d'étapes, mise en œuvre par un dispositif informatique, comprenant notamment une étape (E2) de génération d'un modèle représentatif de l'état de l'échantillon avant l'application du chargement mécanique et une étape (E5) de corrélation numérique des volumes pour évaluer une variation d'une déformation de l'échantillon sur les images successives de l'échantillon ainsi qu'une étape (E6) d'analyse, le procédé (P) qui est basé sur une analyse d'images réelles permettant ainsi de déterminer, de façon précise et simple, la déformation d'une structure à couches multiples.

## Description

### Domaine technique

La présente invention concerne un procédé et un système pour déterminer la déformation d'une structure à couches multiples.

### Etat de la technique

Un fuselage ou plus largement une structure d'un aéronef, telle qu'une voilure, un empennage, ..., peuvent comprendre différentes couches structurelles. Ces couches structurelles peuvent être métalliques ou, plus récemment, réalisées en matériau composite, par exemple à base de fibres de carbone.

Que le fuselage soit métallique ou composite, il est nécessaire de le peindre afin qu'il reflète les couleurs de la compagnie aérienne qui exploitera cet avion et qu'il soit protégé des agressions extérieures. Pour cela, on y dépose différentes couches de matériaux, et notamment des couches de peinture.

Ces couches de matériaux présentent des caractéristiques différentes de même que des comportements différents face aux efforts et aux contraintes mécaniques. Il est donc intéressant de connaître le comportement de chaque couche et l'impact (sur les couches voisines) d'un défaut existant sur une couche.

Une première solution est d'étudier un échantillon représentatif des revêtements utilisés lors d'essais, par exemple de traction. Cependant, les résultats recueillis présentent un résultat global pour lequel il n'est pas possible d'identifier le comportement de chaque couche et de déterminer quelle couche est, par exemple, responsable du départ de fissures causant la rupture de l'échantillon.

Une autre solution est d'étudier indépendamment le comportement de chaque couche. Toutefois, cela implique de pouvoir réaliser des couches fines de revêtement et de les tester. Cependant, pour pouvoir être représentatives, ces couches doivent être minces (de l'ordre de 40 à 50 µm) ce qui n'est pas toujours réalisable. En effet, actuellement, l'épaisseur des couches qu'il est possible de réaliser est de l'ordre de 100 µm. Ces couches sont néanmoins très fragiles, et en outre, plus un film est épais, et plus il comporte de défauts qui faussent les résultats et leur représentativité. Par ailleurs, les résultats obtenus ne permettent pas de comprendre l'impact d'un défaut sur les couches avoisinantes.

Par ailleurs, on connaît, par un article de VALMALLE MALO ET AL, intitulé « Mesoscale DVC anlyses and parameter calibration for pantographic block in 3-point flexure » et publié dans European Journal of Mechanics, volume 101 du 1 juillet 2023, un procédé de déformation d'une structure à couches multiples.

Aucune des solutions précitées n'est donc complètement satisfaisante.

Il existe donc un besoin de trouver une solution permettant de déterminer, de façon précise et relativement simple, des déformations au sein d'un assemblage de couches fines de matériaux, et notamment de peinture.

### Exposé de l'invention

La présente invention a pour objet de proposer une telle solution. A cet effet, elle concerne un procédé de détermination de la déformation d'une structure à couches multiples, c'est-à-dire d'une structure pourvue d'une pluralité de couches (fines).

Selon l'invention, ledit procédé comporte au moins les étapes suivantes :
- une étape de mise à disposition d'un échantillon de la structure à couches multiples ;
- une suite d'étapes de prise d'images, mise en œuvre par un dispositif de test, au cours de laquelle un chargement mécanique croissant est appliqué sur l'échantillon de la structure à couches multiples, et une image initiale de l'échantillon avant l'application du chargement mécanique ainsi que des images successives de l'échantillon soumis au chargement mécanique croissant sont générées, lesdites images comprenant au moins des images 3D (c'est-à-dire des images en trois dimensions) de l'échantillon ; et
- une suite d'étapes de traitement, mise en œuvre à l'aide d'un dispositif informatique, ladite suite d'étapes de traitement comprenant :
   - une étape de génération d'un modèle représentatif de l'état de l'échantillon avant l'application du chargement mécanique, à partir de ladite image initiale ;
   - une étape de maillage dudit modèle ;
   - une étape de génération d'un volume géométrique ;
   - une étape de corrélation numérique des volumes pour évaluer une variation d'une déformation de l'échantillon sur les images successives de l'échantillon, image après image, en adaptant à chaque fois le maillage d'une image à la variation de la déformation évaluée pour l'image précédente ; et
   - une étape d'analyse de la déformation de l'échantillon,
   l'étape de génération d'un volume géométrique, l'étape de corrélation numérique des volumes et l'étape d'analyse étant mises en œuvre image après image sur les images successives générées à la suite d'étapes de prise d'images.

L'étape d'analyse permet de déterminer une déformation de l'échantillon (de la structure à couches multiples) et d'évaluer sa variation.

Ainsi, grâce à l'invention, le procédé permet de déterminer, de façon précise et relativement simple, la déformation d'une structure à couches multiples, c'est-à-dire d'une structure pourvue d'une pluralité de couches, en particulier des couches fines.

En effet, le procédé est basé sur l'analyse d'images réelles qui prennent, notamment, en compte les caractéristiques de fabrication et potentiellement de vieillissement (effet de l'absorption d'eau, des interactions UV et/ou thermiques, des solvants, ...) de la structure analysée. Le procédé utilise ainsi des images (réelles) reproduisant la déformation effective de l'échantillon au fur et à mesure de l'application du chargement mécanique (qui peut correspondre à un effort ou à un déplacement), ce qui permet d'obtenir des résultats correspondant à la situation réelle, qui sont ainsi très précis.

Avantageusement, à l'étape d'analyse, la valeur d'au moins un paramètre représentatif de la déformation, est déterminée. Dans ce cas, de façon avantageuse, le paramètre représentatif de la déformation correspond au chargement mécanique appliqué lorsqu'une fracture d'au moins une couche de la structure se produit.

Dans un mode de réalisation préféré, le procédé comporte, de plus, une étape d'optimisation numérique, mise en œuvre par le dispositif informatique, pour optimiser, à l'aide de résultats de l'étape d'analyse, au moins une caractéristique des couches de la structure à couches multiples afin d'homogénéiser le comportement en déformation desdites couches.

De plus, l'analyse des résultats de déformation permet d'établir des directives de conception (seuil d'initiation de déformation) et des lois de comportement. Les analyses permettent, notamment, d'adapter et d'optimiser la structure avec une nouvelle configuration des couches.

Par ailleurs, avantageusement, la suite d'étapes de prise d'images comprend des paliers d'application du chargement mécanique et les images 3D sont générées à de tels paliers.

De plus, dans un mode de réalisation particulier, à la suite d'étapes de prise d'images, des images auxiliaires 2D (en deux dimensions) sont générées entre les paliers d'application du chargement mécanique, lesdites images auxiliaires 2D étant utilisées, en complément des images 3D, à ladite suite d'étapes de traitement.

En outre, à l'étape de génération du modèle et à l'étape de génération du volume géométrique, le modèle et le volume géométrique sont générés :
- dans un premier mode de réalisation, à partir de ladite image initiale ; et
- dans un second mode de réalisation, à partir d'épaisseurs des couches de l'échantillon, mesurées sur ladite image initiale.

Par ailleurs, dans un mode de réalisation particulier, un défaut est créé dans l'échantillon mis à disposition, et à la suite d'étapes de prise d'images, les images sont générées dans une partie de l'échantillon (correspondant à une zone tridimensionnelle restreinte de l'échantillon) comprenant ledit défaut.

La présente invention concerne également un système de détermination de la déformation d'une structure à couches multiples.

Selon l'invention, ledit système comporte au moins :
- un dispositif de test configuré pour appliquer un chargement mécanique croissant sur un échantillon de la structure à couches multiples, et pour générer une image initiale de l'échantillon avant l'application du chargement mécanique ainsi que des images successives de l'échantillon soumis au chargement mécanique croissant, lesdites images comprenant au moins des images 3D (en trois dimensions) de l'échantillon ; et
- un dispositif informatique configuré pour :
   - générer un modèle représentatif de l'état de l'échantillon avant l'application du chargement mécanique, à partir de ladite image initiale ;
   - réaliser un maillage dudit modèle ;
   - générer un volume géométrique ;
   - réaliser une corrélation numérique des volumes afin d'évaluer une variation d'une déformation de l'échantillon sur les images successives de l'échantillon, image après image, en adaptant à chaque fois le maillage d'une image à la variation de la déformation évaluée pour l'image précédente ; et
   - réaliser une analyse de la déformation de l'échantillon.

### Brève description des figures

Les figures annexées feront bien comprendre comment l'invention peut être réalisée. Sur ces figures, des références identiques désignent des éléments semblables.
La figure 1 est le schéma synoptique d'un mode de réalisation particulier d'un procédé pour déterminer la déformation d'une structure à couches multiples.
La figure 2 montre schématiquement un mode de réalisation particulier d'un système apte à mettre en œuvre le procédé de la figure 1.
La figure 3 est une vue partielle, schématique et en coupe d'un exemple de structure à couches multiples.
La figure 4 est une vue schématique en perspective d'un modèle d'un d'échantillon.
La figure 5 est un schéma d'un dispositif de test appliqué à un échantillon.
La figure 6 est une vue schématique en perspective d'un maillage d'un modèle.

### Description détaillée

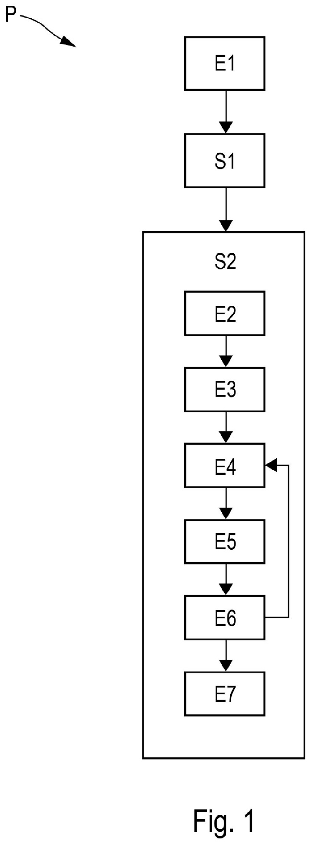

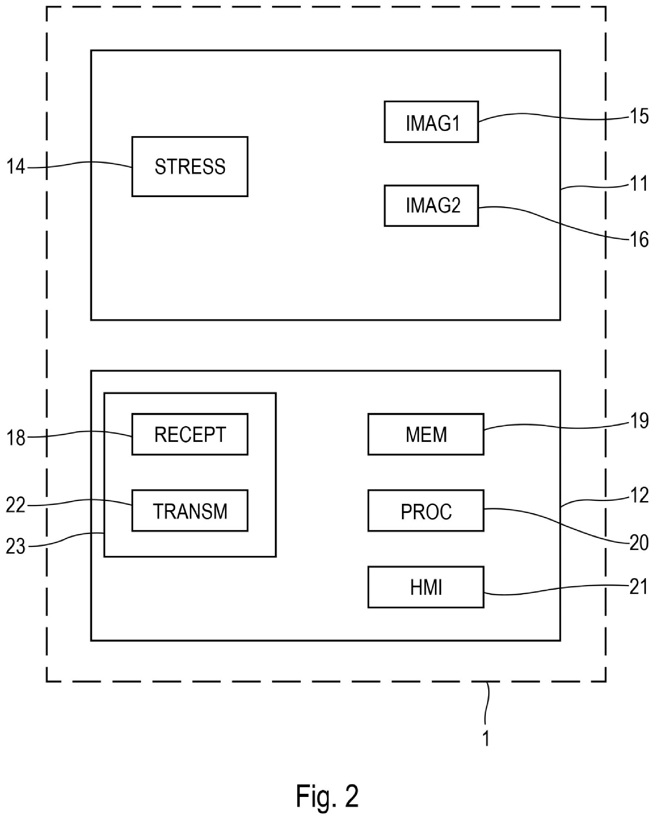

Dans le cadre de la présente invention, un procédé P (par exemple tel que celui représenté dans un mode de réalisation particulier sur la figure 1) qui est susceptible d'être mis en œuvre par un système 1 (par exemple tel que celui représenté dans un mode de réalisation particulier sur la figure 2), est destiné à déterminer, en particulier, la déformation d'une structure à couches multiples, c'est-à-dire d'une structure pourvue notamment d'une pluralité de couches.

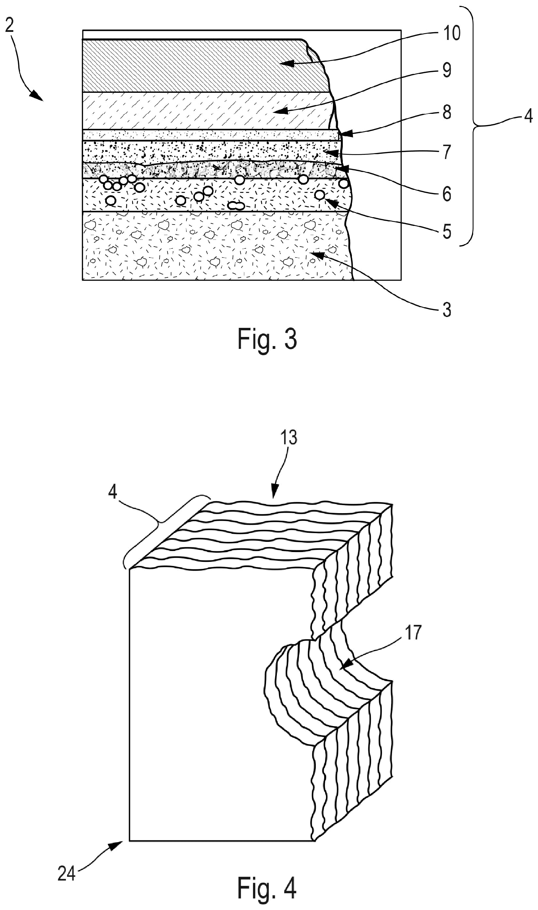

A titre d'illustration, un exemple d'une telle structure 2 à couches multiples est représenté sur la figure 3. Cette structure 2 comporte un support 3 sur lequel sont appliquées plusieurs couches de matériaux, et notamment des couches de peinture.

Dans un mode de réalisation préféré, au moins l'une ou plusieurs des couches de la structure sont des couches fines. On entend par couches fines des couches d'épaisseur inférieure à 80 µm et généralement de l'ordre de 40 µm à 50 µm. Bien que non exclusivement, la structure à couches multiples peut correspondre plus particulièrement à une structure d'un aéronef, notamment d'un avion de transport, et en particulier à une partie du fuselage de l'aéronef ou à une autre structure de l'aéronef, telle qu'une voilure ou un empennage.

Dans l'exemple de la figure 3, la structure 2 comporte le support 3 sur lequel est appliqué un ensemble 4 de couches superposées de matériaux, et notamment des couches de peinture. Le support 3 peut comporter une ou plusieurs couches structurelles (non représentées) réalisées en métal ou en matériau composite, par exemple à base de fibres de carbone.

Dans l'exemple illustratif de la figure 3, l'ensemble 4 destiné plus particulièrement au fuselage d'un aéronef comprend, les couches 5 à 10 successives (superposées) suivantes :
- la couche 5 qui correspond à une couche de protection contre la foudre (« lightning strike protection layer » en anglais) et qui est appliquée sur le support 3. Cette couche de protection contre la foudre peut comprendre une feuille de cuivre anti-foudre qui est noyée dans un film polymère comportant des fibres de verre pour faciliter la manipulation et l'application de la feuille de cuivre ;
- la couche 6 qui correspond à une couche d'apprêt de base (« basic primer layer » en anglais) ;
- la couche 7 qui correspond à une couche d'apprêt externe (« external primer layer » en anglais). La couche 6 et la couche 7 sont appliquées sur la couche 5. Elles comprennent des pigments de céramique pour obtenir une couleur blanche sur laquelle on peut appliquer le logo de la compagnie aérienne ;
- la couche 8 qui est appliquée sur la couche 7 et qui correspond à un revêtement intermédiaire (« intermediate coating » en anglais) favorisant un décapage des couches dans le cas où il serait nécessaire de repeindre le fuselage ou la structure ;
- la couche 9 et la couche 10 qui sont appliquées sur la couche 8. La couche 9 et la couche 10 correspondent à un revêtement de base et un revêtement transparent, respectivement. Elles apportent de la brillance au fuselage ou à la structure.

Le système 1 a pour but de déterminer, notamment, la déformation d'une telle structure 2 à couches 5 à 10 (fines) multiples, en utilisant un échantillon 13 (de la structure 2 à couches multiples) tel que celui représenté schématiquement sur la figure 4.

Pour ce faire, le système 1 comporte notamment, comme représenté sur la figure 2 :
- un dispositif de test 11 configuré pour appliquer un chargement mécanique (qui peut correspondre à un effort ou à un déplacement) croissant sur l'échantillon 13 de la structure 2 à couches multiples, et pour générer une image initiale I1 de l'échantillon 13 avant l'application du chargement mécanique ainsi que des images successives I2 à IN (N étant un entier) de l'échantillon 13 soumis au chargement mécanique croissant ; et
- un dispositif informatique 12 configuré pour, notamment :
   - générer un modèle représentatif de l'état de l'échantillon 13 avant l'application du chargement mécanique, à partir de ladite image initiale I1 ;
   - réaliser un maillage dudit modèle ;
   - générer un volume géométrique ;
   - réaliser une corrélation numérique des volumes afin d'évaluer une variation d'une déformation de l'échantillon 13 sur les images successives I1 à IN de l'échantillon 13, image après image, en adaptant à chaque fois le maillage d'une image à la variation de la déformation évaluée pour l'image précédente ; et
   - réaliser une analyse de la déformation de l'échantillon 13.

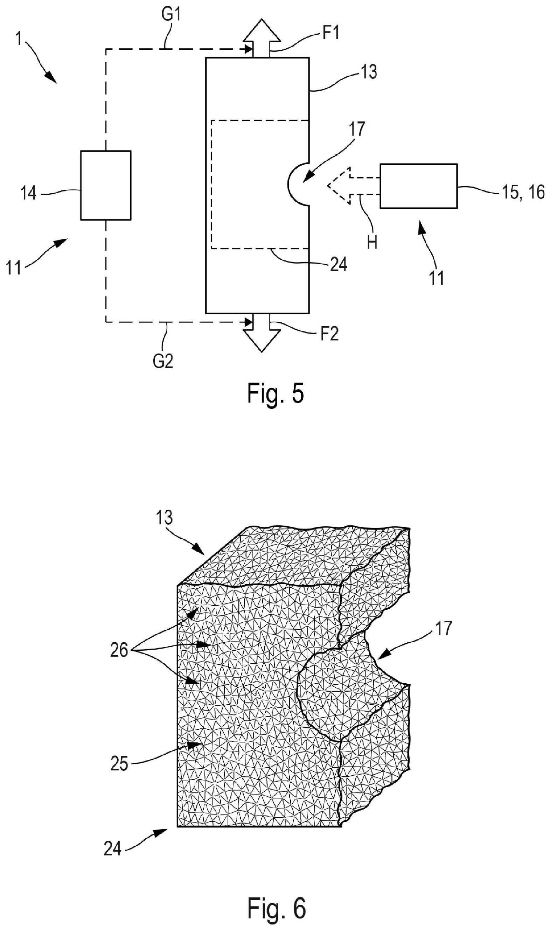

A cet effet, le dispositif de test 11 comprend, comme représenté sur les figures 2 et 5 :
- une unité d'application de chargement mécanique 14 (STRESS pour « Stress applying unit » en anglais) pour appliquer un chargement mécanique croissant sur l'échantillon 13 de la structure à couches multiples ; et
- au moins une unité de prise d'images 15, 16 (IMAG pour « Imaging unit » en anglais) pour générer l'image initiale I1 de l'échantillon 13 avant l'application du chargement mécanique, ainsi que les images I2 à IN successives de l'échantillon 13 lorsqu'il est soumis au chargement mécanique croissant, par l'action de l'unité d'application de chargement mécanique 14.

Le procédé P, mis en œuvre par ledit système 1, a donc en particulier pour objet de déterminer une déformation d'une structure 2 à couches multiple et d'évaluer sa variation.

Pour ce faire, ledit procédé P comprend, comme représenté sur la figure 1, notamment les étapes suivantes, mises en œuvre par le système 1 :
- une étape E1 de mise à disposition d'un échantillon 13 de la structure à couches multiples ;
- une suite S1 d'étapes de prise d'images, mise en œuvre par le dispositif de test 11, au cours de laquelle un chargement mécanique croissant est appliqué sur l'échantillon 13 de la structure à couches multiples, et l'image initiale I1 de l'échantillon 13 avant l'application du chargement mécanique ainsi que les images successives I2 à IN de l'échantillon 13 soumis au chargement mécanique croissant sont générées, lesdites images comprenant au moins des images 3D (en trois dimensions) de l'échantillon 13 ; et
- une suite S2 d'étapes de traitement (de données), mise en œuvre à l'aide du dispositif informatique 12, ladite suite S2 d'étapes de traitement comprenant :
   - une étape E2 de génération d'un modèle représentatif de l'état de l'échantillon 13 avant l'application du chargement mécanique, à partir de ladite image initiale I1 ;
   - une étape E3 de maillage du modèle généré à l'étape E2 ;
   - une étape E4 de génération d'un volume géométrique ;
   - une étape E5 de corrélation numérique des volumes, pour évaluer une variation d'une déformation de l'échantillon sur les images I1 à IN successives de l'échantillon 13, image après image, en adaptant à chaque fois le maillage d'une image à la variation de la déformation évaluée pour l'image précédente ; et
   - une étape E6 d'analyse de la déformation de l'échantillon 13.

L'étape E4 de génération d'un volume géométrique, l'étape E5 de corrélation numérique des volumes et l'étape E6 d'analyse sont mises en œuvre image après image sur les images I1 à IN successives, générées à la suite S1 d'étapes de prise d'images, donc au fur et à mesure de l'application du chargement mécanique.

Dans un mode de réalisation préféré, le procédé P comporte, de plus, comme représenté sur la figure 1, une étape d'optimisation numérique E7, également mise en œuvre par le dispositif informatique 12.

On décrit, à présent, plus en détail les différentes étapes du procédé P.

A l'étape E1 de mise à disposition, un opérateur prépare l'échantillon 13 de la structure 2 à couches multiples.

L'échantillon 13 est réalisé de manière à être représentative de la structure 2 (figure 3) considérée, c'est-à-dire à être représentative de la superposition des différentes couches 5 à 10 de matériaux constitutifs considérées, par exemple les différentes couches de matériaux d'un revêtement appliqué sur le fuselage d'un aéronef.

Dans un mode de réalisation préféré, tel que considéré dans la description suivante, l'échantillon 13 comporte un défaut 17, qui existe préalablement à l'application d'un chargement mécanique. Ce défaut peut correspondre à une entaille, un trou, ..., ou à tout autre anomalie dans le matériau de l'échantillon 13.

Dans ce mode de réalisation préféré, comme la déformation se développera principalement au niveau de ce défaut 17, les images réalisées à la suite S1 d'étapes de prise d'images, sont limitées à une partie 24 (figue 5) de l'échantillon 13 comprenant ledit défaut 17. On s'intéresse ainsi à une zone tridimensionnelle plus restreinte que tout l'échantillon 13, ce qui permet d'avoir à traiter un volume de données moins important.

Bien entendu, dans le cadre de la présente invention, le procédé P peut être mis en œuvre sur un échantillon ne comprenant pas de défaut.

A la suite S1 d'étapes de prise d'images, l'unité d'application de chargement mécanique 14 du dispositif de test 11 applique un chargement mécanique croissant sur l'échantillon 13 de la structure à couches multiples, et au moins l'unité de prise d'image 15 du dispositif de test 11 réalise des images successives de l'échantillon 13 soumis au chargement mécanique croissant.

Dans le cadre de la présente invention, pour la mise en œuvre du procédé P, on peut prévoir un ou des chargements mécaniques de types différents, qui sont appliqués à l'échantillon 13 de la structure 2, notamment en fonction du ou des types de chargements mécaniques que la structure 2 risque de subir pendant son utilisation future. Concernant le chargement mécanique, il peut notamment s'agir d'une traction, d'une compression, d'une flexion, d'un cisaillement, ...

A titre d'illustration, dans la description suivante, le procédé P prévoit l'application d'un chargement mécanique correspondant à une traction. Pour ce faire, l'unité d'application de chargement mécanique 14 est configurée pour appliquer, comme illustré schématiquement par des flèches G1 et G2 sur la figure 5, une traction illustrée schématiquement par des flèches F1 et F2 sur l'échantillon 13.

L'application du chargement mécanique croissant est réalisée de préférence par paliers, c'est-à-dire qu'un chargement mécanique augmentant progressivement est appliqué entre deux paliers, et à chaque palier, le chargement mécanique obtenu est maintenu tel quel (c'est-à-dire au niveau où il est à ce moment).

La suite S1 d'étapes comprend ainsi, de préférence, des paliers d'application du chargement mécanique, et les images 3D sont générées (par l'unité de prise d'images 15 (IMAG 1), comme illustré schématiquement par une flèche H sur la figure 5) à de tels paliers (c'est-à-dire à des pauses dans l'application du chargement mécanique croissant) afin d'obtenir des images nettes de la structure de l'échantillon 13.

Pour ce faire, l'unité de prise d'images 15 peut, par exemple, correspondre à un tomographe à rayon X, qui met en œuvre une méthode de mesure non-destructrice et permet de numériser en voxels de niveaux de gris la microstructure de l'échantillon 13 via une image 3D (en trois dimensions).

Une première image dite image initiale I1 est générée avant l'application du chargement mécanique, puis les autres images successives I2 à IN de l'échantillon 13 sont générées au fur et à mesure de l'application du chargement mécanique.

Dans le cadre de la présente invention, les images sont générées sur tout l'échantillon 13 ou sur une partie seulement de ce dernier représentant un volume d'intérêt, comme la partie 24 (figures 4, 5 et 6) qui est définie de manière à englober le défaut 17.

De plus, dans un mode de réalisation particulier, à la suite S1 d'étapes de prise d'images, des images auxiliaires 2D sont générées par l'unité de prise d'images 16 (IMAG 2), par exemple un système de radiographie à rayons X. De préférence, ces images auxiliaires 2D sont générées entre les paliers d'application du chargement mécanique, lorsqu'un chargement mécanique qui augmente est appliqué.

Ces images auxiliaires (ou intermédiaires) permettent d'obtenir des informations supplémentaires pour les situations entre deux paliers. De préférence, ces images auxiliaires 2D générées par l'unité de prise d'images 16 sont utilisées pour créer des images 3D auxiliaires (qui seront utilisées dans la suite S2 de la même manière que les images 3D générées par l'unité de prise d'images 15).

Les images I1 à IN prises par la ou les unités de prise d'images 15, 16 sont transmises au dispositif informatique 12 (figure 2), qui les reçoit par exemple via une unité de réception 18 (RECEPT pour « reception unit » en anglais). Ces images peuvent être stockées dans une mémoire 19 (MEM pour « Memory » en anglais) du dispositif informatique 12.

Les images I1 à IN sont utilisées par le dispositif informatique 12 dans des traitements réalisés dans la suite d'étapes de traitement S2, par exemple au moyen d'une unité de traitement de données 20 (PROC pour « (data) process unit » en anglais) dudit dispositif informatique 12.

Ladite suite S2 d'étapes de traitement, mises en œuvre à l'aide du dispositif informatique 12, comprend, tout d'abord, une étape E2 (figure 1) de génération d'un modèle.

L'objectif de cette étape E2 de génération d'un modèle est de créer un modèle qui est représentatif de l'état de l'échantillon 13 avant l'application du chargement mécanique, à savoir les efforts de traction.

Dans un premier mode de réalisation, le modèle est généré à partir de l'image initiale I1. Ce modèle correspond exactement à cette image initiale I1.

En outre, dans un second mode de réalisation, le modèle est généré à partir des épaisseurs (des couches de l'échantillon 13) qui sont mesurées sur l'image initiale I1. Le modèle est réalisé de manière théorique en reproduisant la géométrie de l'échantillon 13 à partir de ces épaisseurs des couches mesurées grâce à l'image initiale 11. Dans ce cas, le modèle correspond à l'empilement (ou ensemble 4) de couches.

A l'étape E3 de maillage qui suit, quel que soit le mode de réalisation utilisé à l'étape E2 de génération du modèle, l'unité de traitement de données 20 réalise un maillage 25 (figure 6) du modèle (formé à l'étape E2).

Pour ce faire, les tailles des éléments finis 26 utilisés pour le maillage 25 sont choisies en fonction de la microstructure détaillée à capturer. Les éléments finis 26 utilisés correspondent, par exemple, à des tétraèdres (à base de triangle).

A l'étape E4 suivante de génération du volume géométrique, le volume géométrique est généré par l'unité de traitement de données 20. Le volume géométrique est généré différemment en fonction du mode de réalisation utilisé à l'étape E2 pour former le modèle.

Dans le premier mode de réalisation, l'unité de traitement de données 20 du dispositif informatique 12 crée le volume géométrique composé des différentes couches, à partir de l'image initiale I1.

En outre, dans le second mode de réalisation, l'unité de traitement de données 20 du dispositif informatique 12 reconstruit le volume géométrique par empilement des différentes couches mesurées sur l'image initiale I1.

Ensuite, à l'étape E5, une corrélation numérique des volumes est mise en œuvre par l'unité de traitement de données 20 pour évaluer le déplacement, la déformation et l'initiation des dommages (fissures, délaminage, ...). Cette étape E5 permet de reproduire, dans le modèle et pour les deux modes de réalisation précités, les déplacements visibles sur les différentes images.

Pour ce faire, pour chaque image considérée, le maillage d'une image est adapté à la variation de la déformation évaluée pour l'image précédente.

L'étape E4 de génération d'un volume géométrique, l'étape E5 de corrélation numérique des volumes et l'étape E6 d'analyse sont mises en œuvre image après image, sur les images I1 à IN successives générées à la suite S1 d'étapes de prise d'images, donc au fur et à mesure de l'application du chargement mécanique.

L'étape d'analyse E6 effectue, par conséquent, une analyse de la déformation de l'échantillon au fur et à mesure de l'application des efforts de traction.

A cette étape d'analyse E6, de préférence, la valeur d'au moins un paramètre représentatif de la déformation, est déterminée. A titre d'illustration, le paramètre représentatif de la déformation peut correspondre au chargement mécanique appliqué lorsqu'une fracture d'au moins une couche de la structure se produit.

On est ainsi en mesure de déterminer le niveau de déformation juste avant qu'une première couche subit une fracture, ce qui donne l'indication du niveau d'efforts à ne pas dépasser.

Dans un autre exemple, on peut également déterminer un seuil d'initiation d'un dommage particulier dans la structure.

Dans un mode de réalisation préféré, le procédé P comporte, de plus, l'étape E7 d'optimisation numérique, mise en œuvre par le dispositif informatique 12. Cette étape E7 a pour objet d'optimiser, à l'aide de résultats de l'étape E6, au moins une caractéristique des couches de la structure à couches multiples afin d'obtenir un comportement homogène des couches en déformation.

De préférence, la caractéristique qui est modifiée, de façon numérique, concerne la texture du matériau formant la couche considérée, à savoir par exemple l'épaisseur de cette couche ou, dans le cas d'une couche comprenant des trous (tels que les trous dans le grillage d'un revêtement en cuivre destiné à dissiper l'énergie de la foudre lorsqu'elle frappe un avion), le diamètre de ces trous.

Pour ce faire, à titre d'illustration, on cherche à minimiser les gradients de déformation de chaque couche afin d'avoir le comportement homogène en déformation. Le dispositif informatique 12 réalise des traitements itératifs en modifiant la caractéristique considérée jusqu'à obtenir le résultat souhaité.

L'analyse des résultats de déformation permet également d'établir des directives de conception (seuil d'initiation de déformation) et des lois de comportement. Toutes ces analyses permettent de repenser la structure avec une nouvelle configuration de couches.

Ledit dispositif informatique 12 peut également comporter, comme représenté sur la figure 2 :
- une interface homme/machine 21 (HMI pour « Human-Machine Interface » en anglais) permettant à un opérateur de fournir des données au dispositif informatique 12, en particulier pour la mise en œuvre de ses traitements de données ; et
- une unité de transmission 22 (TRANSM pour « transmission unit » en anglais), notamment pour transmettre les résultats des analyses réalisées à un dispositif utilisateur, par exemple à un moyen d'impression.

De plus, l'unité de réception 18 et l'unité de transmission 22 peuvent faire partie d'un système de communication 23 usuel permettant au dispositif informatique 12 de communiquer avec des dispositifs externes au dispositif informatique 12, par une liaison filaire ou non filaire.

Les différents éléments de calcul et/ou unités de calcul du dispositif informatique 12 peuvent correspondre à tout type de processeur apte à mettre en œuvre les traitements et calculs correspondants.

Le procédé P et le système 1, tels que décrits ci-dessus, permettent ainsi de déterminer, de façon précise et relativement simple, la déformation d'une structure à couches multiples, c'est-à-dire d'une structure pourvue d'une pluralité de couches, en particulier des couches fines.

En effet, le procédé P est basé sur l'analyse d'images réelles qui prennent notamment en compte les caractéristiques de fabrication et potentiellement de vieillissement (effet de l'absorption d'eau, des interactions UV et/ou thermiques, des solvants, ...) de la structure analysée. Le procédé P utilise ainsi des images (réelles) reproduisant la déformation effective de l'échantillon au fur et à mesure de l'application du chargement mécanique, ce qui permet d'obtenir des résultats correspondant à la situation réelle, qui sont ainsi très précis.

En outre, l'analyse des résultats relatives à la déformation permet d'établir, par exemple à l'étape E6 ou à l'étape E7, des directives de conception (seuil d'initiation de déformation) et des lois de comportement. De plus, les analyses permettent, notamment, d'adapter et d'optimiser la structure avec une nouvelle configuration des couches.

## Revendications

1. Procédé de détermination de la déformation d'une structure à couches multiples, ledit procédé (P) comportant au moins les étapes suivantes :
- une étape (E1) de mise à disposition d'un échantillon (13) de la structure à couches multiples ;
- une suite (S1) d'étapes de prise d'images, mise en œuvre par un dispositif de test (11), au cours de laquelle un chargement mécanique croissant est appliqué sur l'échantillon (13) de la structure à couches multiples, et une image initiale de l'échantillon (13) avant l'application du chargement ainsi que des images successives de l'échantillon (13) soumis au chargement mécanique croissant sont générées, lesdites images comprenant au moins des images 3D de l'échantillon (13), la suite (S1) d'étapes de prise d'images comprenant des paliers d'application du chargement mécanique, les images 3D étant générées auxdits paliers ; et
- une suite (S2) d'étapes de traitement, mise en œuvre à l'aide d'un dispositif informatique (12), ladite suite (S2) d'étapes de traitement comprenant :
• une étape (E2) de génération d'un modèle représentatif de l'état de l'échantillon (13) avant l'application du chargement mécanique, à partir de ladite image initiale ;
• une étape (E3) de maillage dudit modèle ;
• une étape (E4) de génération d'un volume géométrique ;
• une étape (E5) de corrélation numérique des volumes pour évaluer une variation d'une déformation de l'échantillon (13) sur les images successives de l'échantillon, image après image, en adaptant à chaque fois le maillage d'une image à la variation de la déformation évaluée pour l'image précédente ; et
• une étape (E6) d'analyse de la déformation de l'échantillon (13),
l'étape (E4) de génération d'un volume géométrique, l'étape (E5) de corrélation numérique des volumes et l'étape (E6) d'analyse étant mises en œuvre image après image sur les images successives générées à la suite (S1) d'étapes de prise d'images,
**caractérisé en ce qu'**à la suite (S1) d'étapes de prise d'images, des images auxiliaires 2D sont générées entre les paliers d'application du chargement mécanique, lesdites images auxiliaires 2D étant utilisées, en complément des images 3D, à ladite suite (S2) d'étapes de traitement.

2. Procédé selon la revendication 1,
**caractérisé en ce qu'**à l'étape (E6) d'analyse, la valeur d'au moins un paramètre représentatif de la déformation, est déterminée.

3. Procédé selon la revendication 2,
**caractérisé en ce que** le paramètre représentatif de la déformation correspond au chargement mécanique appliqué lorsqu'une fracture d'au moins une couche de la structure se produit.

4. Procédé selon l'une quelconque des revendications précédentes,
**caractérisé en ce qu'**il comporte, de plus, une étape d'optimisation numérique (E7), mise en œuvre par le dispositif informatique (12), pour optimiser, à l'aide de résultats de l'étape d'analyse (E6), au moins une caractéristique des couches de la structure à couches multiples afin d'homogénéiser le comportement en déformation desdites couches.

5. Procédé selon l'une quelconque des revendications 1 à 4,
**caractérisé en ce qu'**à l'étape (E2) de génération du modèle et à l'étape (E4) de génération du volume géométrique, le modèle et le volume géométrique sont générées à partir de ladite image initiale.

6. Procédé selon l'une quelconque des revendications 1 à 4,
**caractérisé en ce qu'**à l'étape (E2) de génération du modèle et à l'étape (E4) de génération du volume géométrique, le modèle et le volume géométrique sont générées à partir d'épaisseurs des couches de l'échantillon, mesurées sur ladite image initiale.

7. Procédé selon l'une quelconque des revendications précédentes,
**caractérisé en ce qu'**un défaut (17) est créé dans l'échantillon (13) mis à disposition et **en ce qu'**à la suite (S1) d'étapes de prise d'images, les images sont générées pour une partie (24) de l'échantillon (13) comprenant ledit défaut (17).

8. Système de détermination de la déformation d'une structure à couches multiples, ledit système (1) comportant au moins :
- un dispositif de test (11) configuré pour appliquer un chargement mécanique croissant sur un échantillon (13) de la structure à couches multiples, et pour générer une image initiale de l'échantillon (13) avant l'application du chargement mécanique ainsi que des images successives de l'échantillon (13) soumis au chargement mécanique croissant, lesdites images comprenant au moins des images 3D de l'échantillon (13) générées à des paliers d'application du chargement mécanique et des images auxiliaires 2D générées entre les paliers d'application du chargement mécanique ; et
- un dispositif informatique (12) configuré pour :
• générer un modèle représentatif de l'état de l'échantillon (13) avant l'application du chargement mécanique, à partir de ladite image initiale ;
• réaliser un maillage dudit modèle ;
• générer un volume géométrique ;
• réaliser une corrélation numérique des volumes afin d'évaluer une variation d'une déformation de l'échantillon (13) sur les images successives de l'échantillon (13), image après image, en adaptant à chaque fois le maillage d'une image à la variation de la déformation évaluée pour l'image précédente ; et
• réaliser une analyse de la déformation de l'échantillon (13).
